# EUROPEAN PATENT APPLICATION

(11) **EP 0 856 471 A1**
(43) Date of publication of application: **05.08.1998**
(21) Application number: 98300779.0
(22) Date of filing: 03.02.1998
(51) Int. Cl.: B65D 21/04

(54) **Multi-cell tray**

(30) Priority: 04.02.1997 GB 9702279
(71) Applicant: Rosslite Limited, Cornwall PL11 3AX (GB)
(72) Inventor: Arnold, Mark Hanley, Lifton, PL16 0HP (GB)
(74) Representative: Harrison, Ivor Stanley

(57) **Abstract**

A stackable multi-cell tray of the type commonly used by nurseries and garden centres for the sale of plant seedlings and which, as well as being stackable with other such trays in a nested configuration, is also stackable in a vertically expanded configuration with other such trays, without relying on growing medium or other filling material for support, includes conformations which can be placed in registration with corresponding conformations on another such tray when the trays are arranged with the cells in vertical alignment and which adopt a non-registration position when the trays are moved relative to one another to another arrangement with the cells in vertical alignment, in which the conformations on respective trays are nestable in the registration orientation and are non-nestable in the non-registration orientation, whereby the lower surface of the upper tray is supported on the upper surface of the lower tray in the non-registration orientation.

## Description

This invention relates to stackable multi-cell trays especially, but not exclusively, of the type commonly used by nurseries and garden centres for the sale of plant seedlings.

Multi-cell trays of the above type are well known and are commonly made from plastics materials, which may be either thermoplastic plastics materials and formed by, for example, vacuum moulding, or styrene-containing foamed plastics materials formed by injection moulding. As manufactured and before being filled with compost or other growing medium, the trays may be stackable in a nested configuration for occupying the minimum space for transportation and storage, and also for increasing the strength and crush-resistance of the nested trays. On being filled with compost or other growing medium, the trays are stackable in a vertically expanded configuration in which the bottoms of the cells of the or an upper tray are supported on the surface of the growing medium in the tray immediately below. However, where several filled trays are thus stacked, the growing medium in the lower trays, which bear the greatest cumulative weight of the trays above, becomes unacceptably compressed. Such trays, therefore, are not as popular in the horticultural trade as might be supposed, despite the advantage of the ability to be stacked in a nested configuration when empty.

It is an object of the present invention to provide a stackable multi-cell tray which, as well as being stackable with other such trays in a nested configuration, is also stackable in a vertically expanded configuration with other such trays, without relying on growing medium or other filling material for support.

According to an aspect of the present invention, a multi-cell tray includes conformations which can be placed in registration with corresponding conformations on another such tray when the trays are arranged with the cells in vertical alignment and which adopt a non-registration position when the trays are moved relative to one another to another arrangement with the cells in vertical alignment, in which the conformations on respective trays are nestable in the registration orientation and are non-nestable in the non-registration orientation, whereby the lower surface of the upper tray is supported on the upper surface of the lower tray in the non-registration orientation.

Preferably, a multi-cell tray according to the invention and vertically stackable with other such trays comprises a body having notional upper and lower surfaces, a peripheral rim element defining the overall length and breadth of the tray and internal dividing walls defining sides of individual cells, in which the tray includes support elements on the upper or lower surfaces and corresponding recesses opening to the respective other of said surfaces, the support elements and recesses being disposed such that they are respectively in registration in one relative angular orientation of two trays when the respective cells are in vertical alignment and are out of registration when the trays are in another relative angular orientation with the respective cells in vertical alignment, whereby the trays are stackable in a nested configuration in said one angular orientation and are stackable in a vertically expanded configuration in said another angular orientation.

It will be appreciated that, in most instances, the trays will be oblong in plan and the individual cells will be rectangular, either oblong or square. In such instances, there will be two possible relative angular orientations in which two trays can be arranged with their respective cells in vertical alignment; the orientations are separated by 180°. If the trays themselves were square with square cells, there would of course be four relative angular orientations separated respectively by 90°.

Preferably, to render the trays stackable in a nested configuration, the internal dividing walls are sloping, whereby the upper-facing mouths of the cells are larger than the bottoms, and at least the lower parts of the cell walls define therebetween, outside the cells, a channel which accommodates at least the upper parts of the cell walls in the nested configuration. Conveniently, the support elements comprise webs or fillets which bridge the channels between at least some adjacent cell walls and extend substantially to the notional lower surface of the tray, the webs or fillets being offset from the centre of the cells, and the recesses are formed in the upper parts of the corresponding cell walls offset from the centre of the cells, whereby the webs or fillets of one tray are accommodated within the recesses of a tray immediately beneath in the one relative angular orientation, to permit nesting. In the other relative angular orientation, separated typically by 180° from the first, or in some instances by 90°, the lower edges of the webs or fillets, substantially flush with the notional lower surface of the tray, are supported on the upper edges of the internal dividing walls, thereby maintaining the trays in a vertically-expanded configuration without relying on growing medium for support.

According to preferred subsidiary features of trays according to the invention, the internal cell dividing walls include cut-away portions in the upper parts thereof and extending to the tops of the walls, to provide for equilibration of water between growing medium in the cells; conveniently, where the walls include recesses, the cut-away portions are formed as integral lateral extensions of the recesses. The peripheral rim element may extend to approximately half of the depth or height of the tray and the tray may be provided with vertical slots to receive plant labels; any necessary thickening to the inner-facing surface of the wall of the cells, in order to accommodate each slot, may be receivable, in the nested configuration, by corresponding relief to the lower part of the outer-facing surface of the wall of the cells. In a preferred arrangement, trays according to the invention include a lateral, central line of weakness between respective rows of cells, whereby the tray can be fragmented to provide two half-trays, each half-tray being stackable in both nested and vertically-expanded configurations with the other or other half-trays which may themselves be further subdividable to provide smaller stackable part-trays.

Embodiments of the invention will now be described by way of example with reference to the accompanying drawings, of which
Figure 1 shows in plan view a tray containing twelve cells arranged on a three-by-four basis;
Figure 2 is a side elevation of the tray of Figure 1;
Figure 3 is a section on the line III-III of Figure 1; and
Figure 4 shows first and second trays in a nested configuration supported by a third tray in a vertically-expanded configuration in relation to the second tray.

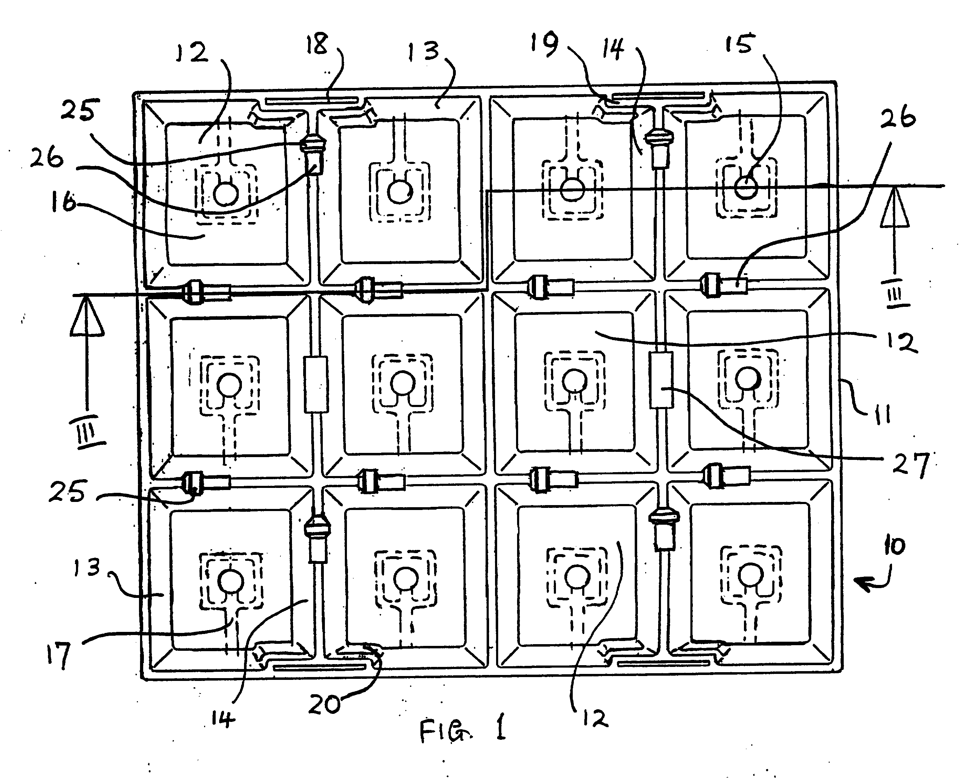

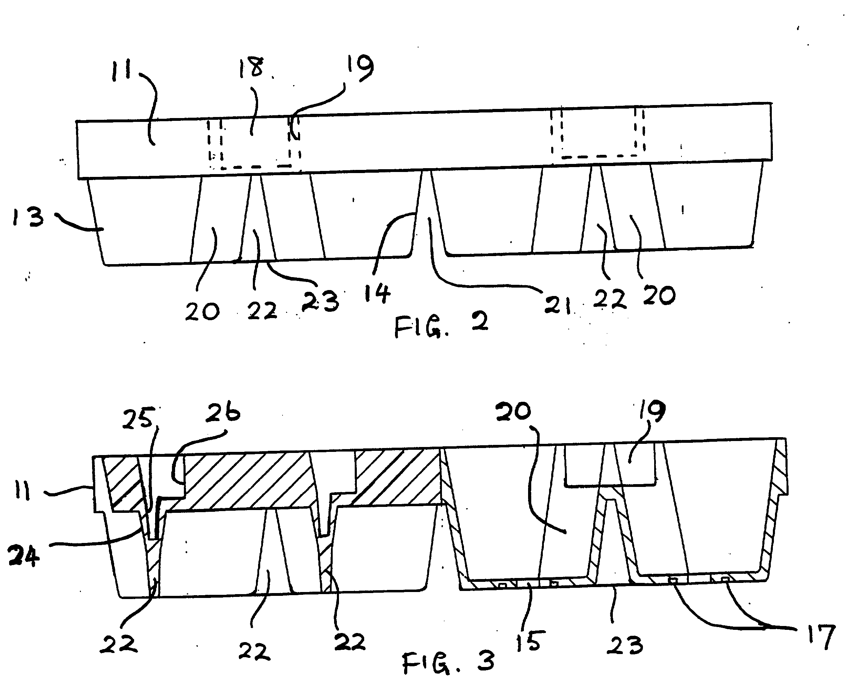

Referring firstly to Figure 1, the tray shown generally at 10 is bounded by a peripheral rim 11 which, as seen in Figure 2, extends for almost half the depth of the tray. The individual cells 12 are defined by sloping external 13 or internal 14 side walls and have drainage holes 15 formed in their bottoms 16; the lower surfaces of the bottoms have channels 17 formed therein to allow water to flow either to or from the drainage holes. Label slots 18 are provided in the external walls, for which purpose the walls are thickened at 19 to accommodate the slots and the outside surfaces of the cell walls are provided with relieved or indented portions 20 (see Figure 2) to receive the thickened parts 19 when two trays are nested together.

Figures 2 and 3 illustrate how inverted "V" channels 21 are formed underneath the tray, between adjacent internal cell walls. The channels are provided at intervals with fillets or webs 22 which extend to a lower edge 23 flush with the lower surfaces of the bottom of the cells; the webs are displaced towards one side of the cells, away from the centre line. The upper regions of the webs flare outwardly slightly at 24 and a slot 25 is provided in the internal cell walls immediately above the web; the slot extends upwardly to the upper edge of the cell walls and is itself slightly 'V'-shaped. At one side, the slot opens into an opening 26 the purpose of which, with other openings 27 which are not associated with webs and slots, is to provide for equilibration of water added to the growing medium which in use fills the trays, as between adjacent cells.

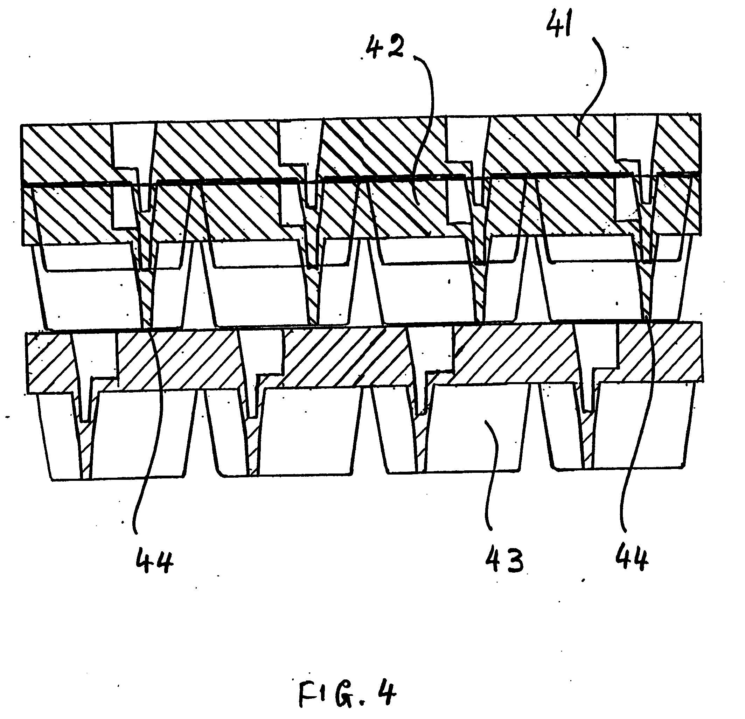

With reference to Figure 4, two trays 41, 42 are stacked in a nested configuration with the webs of the upper tray received within the slots of the lower tray, the two trays previously having been arranged such that the webs and slots correspond. The lower tray 42 is stacked on bottom tray 43 in a vertically-expanded, non-nested, configuration, the tray 43 being arranged at 180° to tray 42 so that the lower edges 44 of the webs are supported by the upper edges of the cell walls, thus preventing nesting despite the cells of the respective trays being in vertical alignment.

## Claims

1. A multi-cell tray including conformations which can be placed in registration with corresponding conformations on another such tray when the trays are arranged with the cells in vertical alignment and which adopt a non-registration position when the trays are moved relative to one another to another arrangement with the cells in vertical alignment, in which the conformations on respective trays are nestable in the registration orientation and are non-nestable in the non-registration orientation, whereby the lower surface of the upper tray is supported on the upper surface of the lower tray in the non-registration orientation.

2. A stackable tray according to claim 1, the tray comprising a body having notional upper and lower surfaces, a peripheral rim element defining the overall length and breadth of the tray and internal dividing walls defining sides of individual cells, in which the tray includes support elements on the upper or lower surfaces and corresponding recesses opening to the respective other of said surfaces, the support elements and recesses being disposed such that they are respectively in registration in one relative angular orientation of two trays when the respective cells are in vertical alignment and are out of registration when the trays are in another relative angular orientation with the respective cells in vertical alignment, whereby the trays are stackable in a nested configuration in said one angular orientation and are stackable in a vertically expanded configuration in said another angular orientation.

3. A stackable tray according to claim 1 or claim 2, wherein the internal dividing walls of the cells are sloping and at least the lower parts of the cell walls define therebetween, outside the cells, a channel which accommodates at least the upper parts of the cell walls in the nested configuration.

4. A stackable tray according to claim 2 or claim 3, wherein the support elements comprise webs or fillets which bridge the channels between at least some adjacent cell walls and extend substantially to the notional lower surface of the tray, the webs or fillets being offset from the centre of the cells, and the recesses are formed in the upper parts of the corresponding cell walls offset from the centre of the cells.

5. A stackable tray according to any of claims 1 to 4, wherein the internal cell dividing walls include cut-away portions in the upper parts thereof and extending to the tops of the walls, to provide for equilibration of water between growing medium in the cells.

6. A stackable tray according to claim 5, wherein the walls include recesses, and the cut-away portions are formed as integral lateral extensions of the recesses.

7. A stackable tray according to claims 2 to 6, wherein the peripheral rim element extends to approximately half the depth or height of the tray.

8. A stackable tray according to any preceding claim, including one or more slots to receive plant labels.

9. A stackable tray according to claim 8, wherein each slot is formed in a thickened upper part of a cell wall and the corresponding lower part of the wall is relieved to accommodate the thickened upper part in the nested configuration.

10. A stackable according to any preceding claim, wherein the tray includes a lateral, central line of weakness between respective rows of cells, whereby the tray can be fragmented to provide two half-trays, each half-tray being stackable in both nested and vertically-expanded configurations with the other or another half-tray which may itself be further sub-dividable to provide smaller stackable part-trays.
